Europäisches Patentamt

European Patent Office

Office européen des brevets

(11) Veröffentlichungsnummer: **0 242 582 B1**

(12) **EUROPÄISCHE PATENTSCHRIFT**

(45) Veröffentlichungstag der Patentschrift: **15.05.91**

(21) Anmeldenummer: **87103722.2**

(22) Anmeldetag: **14.03.87**

(51) Int. Cl.⁵: **F24F 13/06**

(54) **Dralluftauslass.**

(30) Priorität: **25.04.86 CH 696/86**

(43) Veröffentlichungstag der Anmeldung:
**28.10.87 Patentblatt 87/44**

(45) Bekanntmachung des Hinweises auf die
Patenterteilung:
**15.05.91 Patentblatt 91/20**

(84) Benannte Vertragsstaaten:
**AT BE DE FR GB IT NL SE**

(56) Entgegenhaltungen:
**BE-A- 874 658**
**DE-A- 2 634 786**
**DE-A- 2 702 334**
**DE-A- 2 902 733**
**FR-A- 1 557 555**

(73) Patentinhaber: **Hesco Pilgersteg AG**

**CH-8630 Rüti(CH)**

(72) Erfinder: **Rüegg, Max**
**im Ferch 15**
**CH-8636 Wald(CH)**

(74) Vertreter: **Quehl, Horst M., Dipl.-Ing.**
**Seestrasse 640 Postfach 90**
**CH-8706 Meilen/Zürich(CH)**

## Beschreibung

Die Erfindung betrifft einen Dralluftauslass mit den Merkmalen des Oberbegriffs des Patentanspruchs 1.

Eine Vorrichtung dieser Art ist bekannt durch die Fig.4 der DE-A 2 702 334 und die betreffende Beschreibung, in der die Ausführbarkeit mit einem Drall der Luftleitwände erwähnt ist. Um die Luft wahlweise radial nach aussen abzulenken, hat diese bekannte Vorrichtung an dem die Luftleitwände tragenden Körper einen inneren, auswärts gekrümmten Leitring, der in einer vorderen Verstellposition zur Wirkung gelangt, der aber in zurückgestellter Position den Durchströmungsquerschnitt des Luftschachtes wesentlich verengt und somit Strömungsverluste bewirkt.

Der Erfindung liegt die Aufgabe zugrunde, einen Dralluftauslass der genannten Art zu finden, der bei einfacher Konstruktion und entsprechend einfachem Herstellbarkeit eine mit geringen Strömungsverlusten verbundene, besonders wirksame, den gesamten Durchströmungsquerschnitt beeinflussende Verstellbarkeit der Strömungsrichtung der den Dralluftauslass verlassenden Zuluft aufweist. Die Lösung dieser Aufgabe erfolgt aufgrund dem kennzeichnenden Merkmale des Patentanspruchs 1.

Der aufgrund der Erfindung die Luftleitwände in verschiedenen axialen Positionen innerhalb des kreiszylindrischen Schachtes verstellbar haltende Tragkörper kann mit Mitteln für seine Fixierung relativ zu dem Schacht in verschiedenen Verstellstufen oder auch für die kontinuierliche axiale Verstellung versehen sein.

Der die Luftleitwände haltende Tragkörper kann aus einem diese umschliessenden kreiszylindrischen, von dem Schacht umschlossenen Tragring bestehen. Die Luftleitwände können jedoch auch allein durch einen zentral im Schacht verstellbar befestigten nabenartigen Tragkörper mit diesem verstellbar gehalten sein.

Weitere vorteilhafte Ausgestaltungen der Erfindung sind ebenfalls Gegenstand der abhängigen Patentansprüche und in der folgenden Beschreibung anhand der Zeichnungen näher erläutert. Es zeigt:

Fig.1    einen Axialschnitt durch einen Drallauslass,

Fig.2    eine schematische Darstellung des Drallauslasses in einer ersten Einstellposition,

Fig.3    eine Darstellung entsprechend Fig.2 in einer zweiten Einstellposition,

Fig.4    eine Aufsicht auf den Verstellteil des Drallauslasses,

Fig.5    einen Axialschnitt durch den Verstellteil nach Fig.4,

Fig.6    eine perspektivische Darstellung des Verstellteiles nach Fig.4 und 5,

Fig.7    einen Querschnitt im Randbereich des Schachtes des Drallauslasses mit einer Befestigungsvorrichtung,

Fig.8    die Befestigungsvorrichtung nach Fig.7 in einer anderen Eingriffsposition,

Fig.9    eine im Vergleich zu Fig.1 und Fig.7,8 dritte Ausführungsform einer Befestigungsvorrichtung und

Fig.10   eine vierte Ausführungsform einer Befestigungsvorrichtung.

Der Dralluftauslass bzw. Drallauslass hat einen feststehend montierten, im wesentlichen Schacht 2, Kreisringförmigen der an seinem einen Ende einen Flansch 3 aufweist. Sein anderes Ende dient der Verbindung mit einem Luftkanal einer Anlage zur Raumbelüftung bzw. Raumklimatisierung, deren Aufbau den jeweiligen Gegebenheiten auf bekannte Weise angepasst ist. Die Montage des Drallauslasses erfolgt in einem kreisförmigen Wandauschnitt 4, z.B. der Deckenverkleidung 5,5' des zu belüftenden Raumes, wofür Befestigungsvorrichtungen 6,7,8 oder 9 verwendet werden, die im folgenden noch näher beschrieben werden.

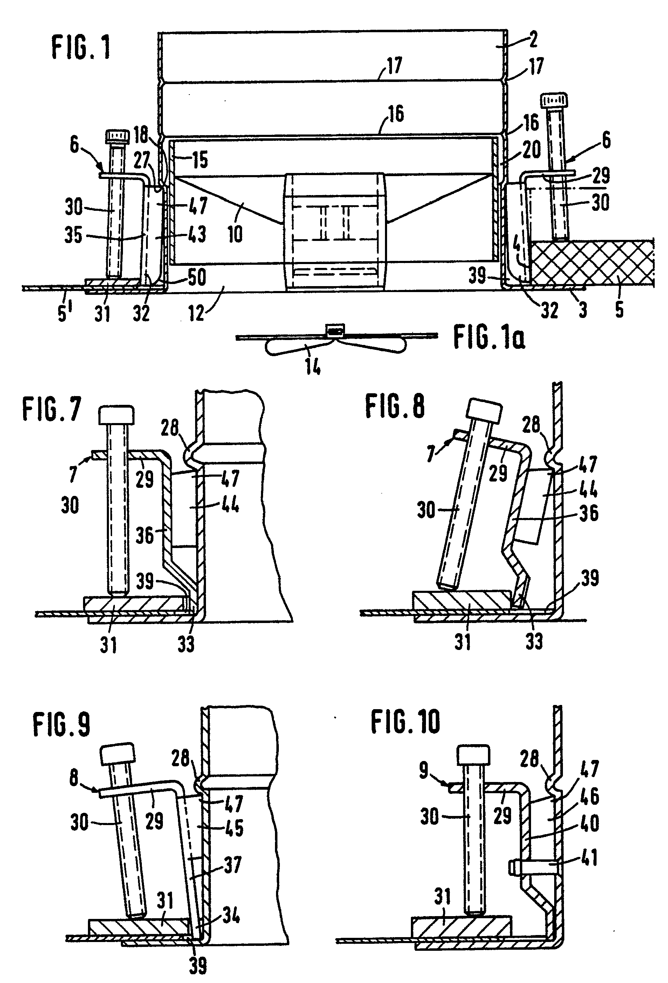

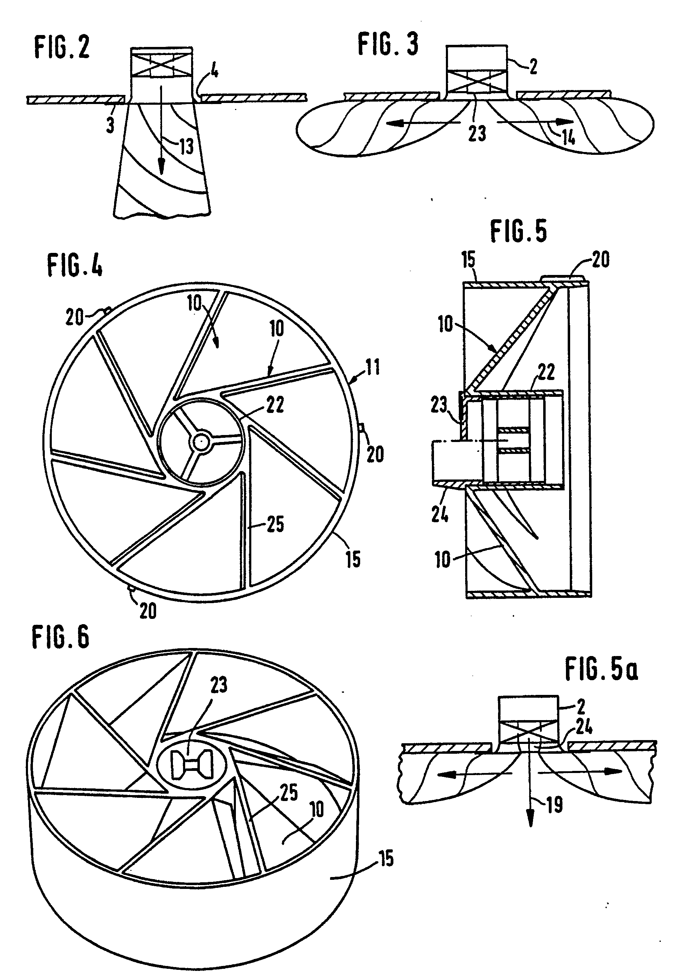

Die in dem Schacht 2 angeordneten Luftleitwände 10, die der Erzeugung der Drallströmung der aus dem Drallauslass austretenden Luft dienen, sind Bestandteil eines Verstellteiles 11 des Drallauslasses, der innerhalb des Schachtes 2 in verschiedenen axialen Positionen arretierbar ist. Abhängig von der gewählten Position dieses Verstellteiles 11 und damit der Luftleitwände 10 relativ zu der Austrittsöffnung 12, bzw. der Ebene des Flansches 3, erhält die austretende Drallströmung 13,14 eine andere Richtung. In den Fig.2 und 3 sind zwei Einstellpositionen dargestellt, von denen diejenige nach Fig.3 zu einer flachen Abströmung der Drallströmung 14 entlang der Raumdecke bzw. den Deckenverkleidungen 5,5' führt, wie auch durch Fig.1a schematisch für die gleiche Position nach Fig.1 angedeutet ist. Es hat sich überraschend gezeigt, dass bei gleicher Schrägstellung der schaufelartigen Luftleitwände 10, d.h. allein durch ihre gesamthafte axiale Verstellung zusammen mit dem sie haltenden kreiszylindrischen Tragring 15 um eine verhältnismässig geringe Distanz von der Austrittsöffnung 12 weg tiefer in den Schacht 2 hinein eine axiale, gebündelte Ausströmung, bei einem Deckenauslass vertikal nach unten, erzielt wird, wie durch die Fig.2 veranschaulicht ist. Auf diese Weise ist eine Anpassung des Strömungsmusters der Dralluftauslässe für die Klimatisierung eines Raumes unter Berücksichtigung des Anwendungszweckes, d.h. Heizen oder Kühlen sowie der räumlichen Gegebenheiten, d.h. an z.B. einen hohen oder niedrigen zu belüftenden Raum, auf einfache Weise durch Wechsel der Position des Verstellteiles 11 innerhalb des Schachtes 2 möglich.

Die Halterung des Verstellteiles 11 in der jeweils ausgewählten Einstellposition oder auch die Verstellung, kann auf verschiedene Weise konstruktiv ermöglicht werden. Beim dargestellten Ausführungsbeispiel sind in der Blechwand des Schachtes 2 in bestimmtem axialen Abstand voneinander umlaufende Rillen 16,17 sowie durch eine Durchmesserverringerung des Schachtes 2 ein Absatz 18 eingeformt, so dass an z.B. drei Umfangsstellen des Tragringes 15 vorgesehene, radial abstehende kleine Erhebungen, Warzen oder Rippen 20 den Tragring 15 an diesem Absatz 18 oder dem konvexen, nach innen gerichteten Teil der Rillen 16,17 abstützen. Mit entsprechendem axialgerichteten Kraftaufwand lassen sich diese Erhebungen 20 über die Rillen 16,17 hinweg drücken, so dass sie den Tragring und damit den Verstellteil 11 mit den Luftleitwänden auf der nächsten Rille 16,17 abstützen. Ein Herausfallen des Verstellteiles 11 aus dem Schacht 2 ist aufgrund der genannten Durchmesserverringerung über den Absatz 18 nicht möglich. Eine andere Verstellmöglichkeit des Tragringes 15 relativ zu dem Schacht 2 kann durch eine schraubenlinienförmig entlang der Schachtinnenseite verlaufende nichtdargestellte Rille und eine in diese eingreifende, am Tragring aussen vorgesehene Warze realisiert werden. Die Aenderung der axialen Position des Verstellteiles 11 wird in diesem Fall durch Verdrehen des Verstellteiles 11 relativ zum Schacht 2 erzielt.

Der Verstellteil 11 kann auch ohne Tragring 15 ausgeführt sein, wenn die schaufelartigen Luftleitwände 10 an einem zentralen, im Schacht 2 verstellbar gehaltenen nabenartigen Tragkörper gehalten sind. Dieser Tragkörper kann ähnlich ausgeführt sein wie der zentrale Kanalstutzen 22 des Verstellteiles 11 nach Fig. 4 bis 6. Die axiale Verstellbarkeit eines solchen zentralen Tragkörpers zur Verstellung der an ihm befestigten Luftleitwände 10 kann durch eine Schraubverbindung mit einem über Streben mit dem Schacht 2 verbundenen nichtdargestellten Teil, d.h. eine Gewindespindel oder eine Gewindemutter, erzielt werden, oder durch bajonettverschlussartige Einrastpositionen.

Im dargestellten Beispiel erfüllt der zentrale Kanalstutzen 22 eine strömungstechnische Aufgabe zur Führung einer sekundären axialgerichteten Zentralströmung 19, die durch einen lösbaren Deckeleinsatz 23 entsprechend einer hälftigen Darstellung in Fig.5 wahlweise erzielt werden kann. In der unteren Hälfte der Darstellung ist statt des Deckeleinsatzes 23 an den Kanalstutzen 22 ein nach aussen überstehender Verlängerungsstutzen 24 angesetzt.

Entsprechend einer bevorzugten Ausführungsform der Erfindung sind die Luftleitwände 10 mit ihrer Aussen- bzw. Abströmkante 25 tangential zum Umfang des zentralen Kanalstutzens 22 angeordnet, so dass ein neuartiger, vorteilhafterer ästhetischer Eindruck erzielt wird, der aufgrund der optischen Beeinflussung der Raumgestaltung durch die Dralluftauslässe besondere Bedeutung hat.

Für die vorteilhafte optische Gestaltung der den Dralluftauslass aufnehmenden Raumwand sind vorzugsweise nur rückseitig, d.h. hinter dem Flansch 3 des Schachtes 2 angreifende Befestigungsvorrichtungen 6,7,8 oder 9 anstatt von Flanschschrauben vorgesehen, die bei Verwendung von dünnem Blech den Flansch deformieren würden. Diese Befestigungsvorrichtungen greifen klemmend hinter einem umlaufenden Absatz 27 oder Wulst 28 des Schachtes 2 ein, der durch die Einformung des der Abstützung des Verstellteiles 11 dienenden Absatzes 18 ohnehin bereits vorhanden sein kann. Die Verspannung erfolgt beispielsweise durch eine an einem nach aussen abstehenden Schenkel 29 angreifende Spannschraube 30, die sich mit ihrem Ende an der Rückseite der Wand- bzw. Deckenverkleidung 5,5′ abstützt. Dabei kann die Abstützung über einen den Schacht umschliessenden Abstützring 31 erfolgen, der insbesondere erforderlich ist, falls die Wand- bzw. Deckenverkleidung 5′ leicht deformierbar ist oder das Ende 32,33,34 des längeren, entlang der Schachtwand mindestens angenähert achsparallel verlaufenden Schenkels 35,36,37 nicht sicher in der Lükke 39 zwischen dem Rand des Wandausschnittes 4 und der Schachtwand eingreifen könnte. Dieser Eingriff ist für eine seitliche Fixierung der Befestigungsvorrichtung 6,7 oder 8 und die beim Spannen erzielte, nach innen gerichtete Hebelwirkung zur Verstärkung des Eingriffes hinter dem umlaufenden Absatz 27 oder Wulst 28 erforderlich, falls nicht der längere Schenkel 40 wie im Beispiel nach Fig.10 auf andere Weise, z.B. durch eine Nietverbindung 41 an der Schachtwand befestigt ist. Der Eingriff der Befestigungsvorrichtung 6,7,8 oder 9 an der Schachtwand erfolgt beispielsweise durch zwei von dem längeren Schenkel 35,36, 37,40 gabelartig abstehende Eingriffsklauen 43 - 46, mit einer spitzen Eingriffskante 47. Die Befestigungsvorrichtungen sind vorzugsweise aus einem Blechteil gestanzt und in die dargestellte Form gebogen, so dass die Eingriffsklauen 43-46 durch abgebogene Blechteile gebildet sind. Um das Einsetzen der Befestigungsvorrichtungen 6,7,8 in die Lücke 39 nahe an der Schachtwand bei einem für die Hebelwirkung ausreichenden Abstand der Spannschraube 30 von der Schachtwand zu erleichtern, ist der längere Schenkel 35,36,40 entweder einseitig an seinem Ende 32 mit einer Abrundung 50 versehen oder entsprechend den Darstellungen der Fig.7,8 und 10 abgekröpft. Wie die Darstellungen der Fig. 7 und 8 zeigen, ergibt sich auch bei unterschiedlichen Breiten der Lücke 39 für den Eingriff des Schenkelendes 32,33,34 ein sicherer Eingriff der Befestigungsvorrichtungen, von denen beispielsweise drei mit gleichem Abstand am Umfang des Schachtes 2 vorgesehen sind.

Die Anzahl der schaufelartigen Luftleitwände 10 des Drallauslasses ist aus ästhetischen Gründen vorzugsweise ungerade und abhängig von seinem Durchmesser. Bei einem Schachtdurchmesser von ca. 100 mm sind beispielsweise 5 Luftleitwände vorgesehen, bei einem Durchmesser von 125 mm 7, bei 180 mm Durchmesser 9 und bei 250 mm Durchmesser 11 oder 13.

**Ansprüche**

1. Dralluftauslass, mit in einem kreisringförmigen Schacht (2) in Umfangsrichtung nebeneinander angeordneten Luftleitwänden (10) zur Erzielung einer Drallströmung der aus dem Schacht (2) ausströmenden Zuluft für die Klimatisierung eines Raumes, wobei der Schacht eine kreiszylindrische Aussenwand hat und die Luftleitwände (10) an einem in Achsrichtung des Schachtes (2) verstellbaren Tragkörper (15) befestigt sind, dadurch gekennzeichnet, dass der Durchströmungsquerschnitt des Dralluftauslasses unabhängig von der axialen Verstellposition der Luftleitwände (10) unveränderbar ist.

2. Dralluftauslass nach Anspruch 1, dadurch gekennzeichnet, dass der Tragkörper ein die Luftleitwände (10) umschliessender, in dem Schacht (2) verschiebbar geführter Tragring (15) ist.

3. Dralluftauslass nach Anspruch 1 oder 2, mit einem zentral in dem Schacht (2) angeordneten kreiszylindrischen Körper (22), mit dem die Luftleitwände verbunden sind, dadurch gekennzeichnet, dass die Abströmkante (25) der Luftleitwände (10) tangential zum Umfang des Körpers (22) angeordnet ist.

4. Dralluftauslass nach Anspruch 3, dadurch gekennzeichnet, dass eine ungerade Anzahl von Luftleitwänden (10) vorgesehen ist.

5. Dralluftauslass nach Anspruch 2, dadurch gekennzeichnet, dass am Schacht (2) durch umlaufende Profilierungen (16,17,18) Abstützränder für den Eingriff von stellenweise am Umfang des Tragringes (15) vorgesehene Erhebungen (20) gebildet sind, die sich in axialem Abstand voneinander befinden.

6. Dralluftauslass nach Anspruch 5, dadurch gekennzeichnet, dass der Schacht (2) an seinem öffnungsseitigen Ende zur Bildung eines Absatzes (18) einen geringeren Durchmesser aufweist.

7. Dralluftauslass nach einem der Ansprüche 1 bis 6, mit einem öffnungsseitigen Flansch (3) des Schachtes (2), gekennzeichnet, durch mehrere am Umfang des Schachtes (2) hinter dem Flansch (3) angeordnete Befestigungsvorrichtungen (6,7,8,9) für die Abstützung einerseits an einer Erhebung (27,28) am Umfang des Schachtes (2) und andererseits rückseitig im Randbereich eines kreisförmigen Wandausschnittes (4), wobei das Ende (32,33,34) eines Schenkels (35,36,37) der Befestigungsvorrichtungen (6,7,8) für den Eingriff in die Lücke (39) zwischen dem Rand des Wandausschnittes (4) und der Wand des Schachtes (2) ausgebildet ist.

8. Dralluftauslass nach Anspruch 7, dadurch gekennzeichnet, dass die Befestigungsvorrichtungen (6,7,8,9) einen quer zur Achse des Schachtes (2) gerichteten Schenkel (29) aufweisen, an dem eine Spannschraube (30) angreift, die sich mit ihrem Ende rückseitig im Randbereich des Wandausschnittes (4) abstützt.

9. Dralluftauslass nach Anspruch 7 oder 8, gekennzeichnet durch einen den Schacht (2) mit einem der Lücke (39) entsprechenden Abstand umschliessenden, parallel zu dem Schachtflansch (3) verlaufenden Abstützring (31).

10. Dralluftauslass nach einem der Ansprüche 1 bis 9, dadurch gekennzeichnet, dass die Befestigungsvorrichtungen (6,7,8,9) für die Abstützung am Umfang des Schachtes (2) zwei gabelartig angeordnete Eingriffsklauen (43-46) aufweisen.

**Claims**

1. Outlet with a vortex flow with, in a circular shaft (2), circumferentially juxtaposed air deflecting walls (10) for obtaining a vortex flow of the supply air flowing out of the shaft (2) for the air conditioning of a room, in which the shaft has a circular cylindrical outer wall and the air deflecting walls (10) are fixed to a support body (15) adjustable in the axial direction of the shaft (2), characterized in that the flow cross-section of the vortex air outlet is invariable independently of the axial adjustment position of the air deflecting walls (10).

2. Outlet with a vortex flow according to claim 1, characterized in that the support body has a support ring (15) surrounding the air deflecting walls (10) and displaceably guided in the shaft (2).

3. Outlet with vortex flow according to claims 1 or 2, with a circular cylindrical body (22) arranged centrally in the shaft (2) and to which are connected the air deflecting walls, characterized in that the outflow edge (25) of the air deflecting walls (10) is positioned tangentially to the circumference of the body (22).

4. Outlet with vortex flow according to claim 3, characterized in that there is an uneven number of air deflecting walls (10).

5. Outlet with vortex flow according to claim 2, characterized in that, as a result of all-round profiles (16,17,18), support edges for the engagement of protuberances (20) zonally provided on the circumference of the support ring (15) and which are axially spaced from one another are formed on the shaft (2).

6. Outlet with vortex flow according to claim 5, characterized in that at its opening-side end, the shaft (2) has a smaller diameter for forming a shoulder (18).

7. Outlet with vortex flow according to one of the claims 1 to 6, with an opening-side flange (3) of the shaft (2), characterized by several fixing devices (6,7,8,9) arranged behind the flange on the circumference of the shaft (2) for support on the one hand on a protuberance (27,28) on the circumference of the shaft (2) and on the other at the back in the marginal area of a circular wall cutout (4), the end (22,33,34) of a leg (35,36,37) of the fixing devices (6,7,8) being constructed for engagement in the gap (39) between the edge of the wall cutout (4) and the wall of the shaft (2).

8. Outlet with vortex flow according to claim 7, characterized in that the fixing devices (6,7,8,9) have a leg (29) directed at right angles to the axis of the shaft (2), on which engages a locking screw (30), which is supported with its end at the back in the marginal area of the wall cutout (4).

9. Outlet with vortex flow according to claims 7 or 8, characterized by a support ring (31) running parallel to the shaft flange (3) and surrounding the shaft (2) with a spacing corresponding to the gap (39).

10. Outlet with vortex flow according to one of the claims 1 to 9, characterized in that the fixing devices (6,7,8,9) have two fork-like engagement claws (43-46) for supporting on the circumference of the shaft (2).

**Revendications**

1. Bouche de sortie d'air tourbillonnaire, avec des déflecteurs d'air (10) disposés côte à côte dans le sens périphérique dans une gaine (2) en forme d'anneau circulaire, pour la production d'un écoulement tourbillonnaire de l'air d'admission issu de la gaine (2) pour la climatisation d'un d'admission issu de la gaine (2) pour la climatisation d'un local, la gaine présentant une paroi extérieure en forme de cylindre circulaire et les déflecteurs d'air (10) étant fixées à un élément de support (15) réglable en direction axiale de la gaine (2), caractérisée en ce que la section transversale d'écoulement de la bouche de sortie d'air est invariable quelle que soit la position de réglage axiale des déflecteurs d'air (10).

2. Bouche de sortie d'air tourbillonnaire suivant la revendication 1, caractérisée en ce que l'élément de support est constitué par un anneau de support enveloppant les déflecteurs d'air (10) guidé à glissement dans la gaine (2).

3. Bouche de sortie d'air tourbillonnaire suivant les revendications 1 ou 2, avec un élément (22) de forme de cylindre circulaire disposé centralement dans la gaine (2), élément (22) auquel sont reliés les déflecteurs d'air, caractérisée en ce que l'arête d'écoulement (25) des déflecteurs d'air (10) est disposée tangentiellement à la périphérie de l'élément (22).

4. Bouche de sortie d'air tourbillonnaire suivant la revendication 3, caractérisée en ce qu'il est prévu un nombre impair de déflecteurs d'air (10).

5. Bouche de sortie d'air tourbillonnaire suivant la revendication 2, caractérisée en ce que sur la gaine (2), par la présence de profils périphériques (16,17,18), sont créés des bords d'appui pour l'engagement de surélévations (20) prévues par endroits à la périphérie de l'anneau de support (15), surélévations qui sont écartées axialement les unes des autres.

6. Bouche de sortie d'air tourbillonnaire suivant la revendication 5, caractérisée en ce que la gaine (2) présente à son extrémité côté orifice un diamètre moindre, aux fins de la création d'un gradin (18).

7. Bouche de sortie d'air tourbillonnaire suivant l'une quelconque des revendications de 1 à 6, avec une bride (3) Prévue du côté orifice de la gaine (2), caractérisée par plusieurs moyens de fixation (6,7,8,9) disposés à la périphérie de la gaine (2) derrière la bride (3), pour l'appui d'une part sur une surélévation (27,28) à la périphérie de la gaine (2) et d'autre part, côté arrière, sur la zone marginale d'une découpe circulaire dans la Paroi (4), l'extrémité (32,33,34) d'une aile (35,36,37) des moyens de fixation (6,7,8) étant conçue pour l'engagement dans l'interstice (39) entre le bord de la découpe (4) de la Paroi et la paroi de la gaine (2).

8. Bouche de sortie d'air tourbillonnaire suivant la revendication 7, caractérisée en ce que les moyens de fixation (6,7,8,9) présentent une aile (29) orientée transversalement à l'axe de la gaine (2), qu' attaque une vis de tension (30) dont l'extrémité s'appuie, côté arrière, sur la zone marginale de la découpe (4).

9. Bouche de sortie d'air tourbillonnaire suivant les revendications 7 ou 8, caractérisée par un anneau d'appui (31) disposé parallèlement à la bride (3) de la gaine et entourant la gaine (2) à une distance correspondant à l'interstice (39).

10. Bouche de sortie d'air tourbillonnaire suivant l'une quelconque des revendications de 1 à 9, caractérisée en ce que les moyens de fixation (6,7,8,9) pour l'appui contre la périphérie de la gaine (2) présentent deux griffes d'engagement (43-46) disposées en forme de fourche.

EP 0 242 582 B1

FIG. 1

FIG. 1a

FIG. 7

FIG. 8

FIG. 9

FIG. 10

7

FIG.2

FIG. 3

FIG.4

FIG.5

FIG.6

FIG.5a